(19) Europäisches Patentamt
European Patent Office
Office européen des brevets

(11) **EP 4 546 271 A1**

(12) **EUROPEAN PATENT APPLICATION**
published in accordance with Art. 153(4) EPC

(43) Date of publication:
**30.04.2025 Bulletin 2025/18**

(21) Application number: **23826508.6**

(22) Date of filing: **21.06.2023**

(51) International Patent Classification (IPC):
*G06T 17/00* (2006.01)    *G06T 15/00* (2011.01)

(86) International application number:
**PCT/CN2023/101681**

(87) International publication number:
**WO 2023/246863 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.06.2022 CN 202210724366**

(71) Applicant: **Future Technology (Xiang Yang) Co.,
Ltd
Xiangyang, Hubei 441000 (CN)**

(72) Inventors:
• **HE, Shu**
  **Xiangyang, Hubei 441000 (CN)**
• **XU, Wanliang**
  **Xiangyang, Hubei 441000 (CN)**

(74) Representative: **Winter, Brandl - Partnerschaft
mbB
Alois-Steinecker-Straße 22
85354 Freising (DE)**

(54) **3D IMAGE GENERATING METHOD AND APPARATUS, AND COMPUTER DEVICE**

(57)    The present application provides a 3D image generating method and a related device, capable of obtaining a clearer 3D imge, thereby improving viewing experience of a user. The method comprises: reading an initial color image and an initial depth image from a backend cache, wherein the initial color image has an association relationship with the initial depth image; remapping the initial depth image to obtain a target depth image; determining a relative displacement corresponding to the initial color image; rendering the initial color image on the basis of the relative displacement and the target depth image to obtain a target color image; and generating a 3D image according to the target color image and the initail color image.

```
An initial color image and an initial depth     --101
image are obtained from a back-end cache

                    ↓

The initial depth image is remapped to obtain    --102
a target depth image

                    ↓

A relative displacement of the initial color     --103
image is determined

                    ↓

The initial color image is rendered based on     --104
the relative displacement and the target depth
image to obtain a target color image

                    ↓

A 3D image is generated according to the         --105
target color image and the initial color image
```

FIG. 1

EP 4 546 271 A1

## Description

### TECHNICAL FIELD

The present application relates to the technical field of image processing, and in particular to a 3D image generating method, a 3D image generating apparatus and a computer device.

### BACKGROUND

With the development of science and technology, products applying 3D display technology have been widely used in people's daily lives. 3D videos applying 3D display technology have a strong visual impact and can bring immersive experiences to consumers.

At current, products applying 3D display technology usually convert a 2D video into a 3D video for stereoscopic display through a view conversion method. However, the 3D video obtained from a 2D video through the view conversion method does not present a perfect 3D display effect and is easy to cause blurring which degrades the users' viewing experience.

### SUMMARY

The present application provides a 3D image generating method, an apparatus and a computer device to get more clearer 3D image and improve users' viewing experience.

A first aspect of the embodiments of the present application provides a 3D image generating method, which includes:

obtaining an initial color image and an initial depth image from a back-end cache, the initial color image and the initial depth image being associated with each other;
remapping the initial depth image to obtain a target depth image;
determining a relative displacement corresponding to the initial color image;
rendering the initial color image based on the relative displacement and the target depth image to obtain a target color image;
generating a 3D image based on the target color image and the initial color image.

A second aspect of the embodiments of the present application provides a 3D generating apparatus, which includes:

a reading unit configured to read an initial color image and an initial depth image associated with the initial color image from a back-end cache;
a mapping unit configured to remap the initial depth image to obtain a target depth image;
a determining unit configured to determine a relative displacement corresponding to the initial color image;
a rendering unit configured to render the initial color image based on the relative displacement and the target depth image to obtain a target color image; and
a generating unit configured to generate a 3D image according to the target color image and the initial color image.

A third aspect of the embodiments of the present application provides a computer device which includes at least one processor, a memory and a transceiver connected therewith, the memory is configured to store program codes, and the processor is configured to call the program codes in the memory to execute the 3D image generating method mentioned above.

In summary, it can be seen that in the embodiments provided by the present application, the initial depth image of the 3D image to be generated is remapped to obtain the target depth image, and the relative displacement corresponding to the initial color image of the 3D image to be generated is determined. Then the initial color image is rendered according to the relative displacement and the target depth image to obtain the target color image, and the target color image and the initial color image are interleaved to generate the 3D image. In this way, a better and clearer 3D image can be got, which improves the users' viewing experience.

### BRIEF DESCRIPTION OF THE DRAWINGS

EP 4 546 271 A1

FIG. 1 is a schematic flowchart of a 3D image generating method according to an embodiment of the present application.

FIG. 2 is a schematic diagram showing an angle between the human eye position and the screen provided by the embodiment of the present application.

FIG. 3 is a schematic diagram showing a relative displacement of a camera during rendering of an initial color image according to an embodiment of the present application.

FIG. 4 is a schematic diagram of a preset path according to an embodiment of the present application.

FIG. 5 is a schematic diagram showing a virtual structure of a 3D image generating apparatus according to an embodiment of the present application.

FIG. 6 is a schematic diagram of a hardware structure of a server according to an embodiment of the present application.

## DETAILED DESCRIPTION OF THE EMBODIMENTS

The technical solutions in the embodiments of the present application will be clearly and completely described below with reference to the accompanying drawings in the embodiments of the present application. Obviously, the described embodiments are only some, and not all of the embodiments of the present application.

A 3D image generating method will be described below from the perspective of a 3D image generating apparatus. The 3D image generating apparatus may be a server or a unit in the server, and is not specifically limited here.

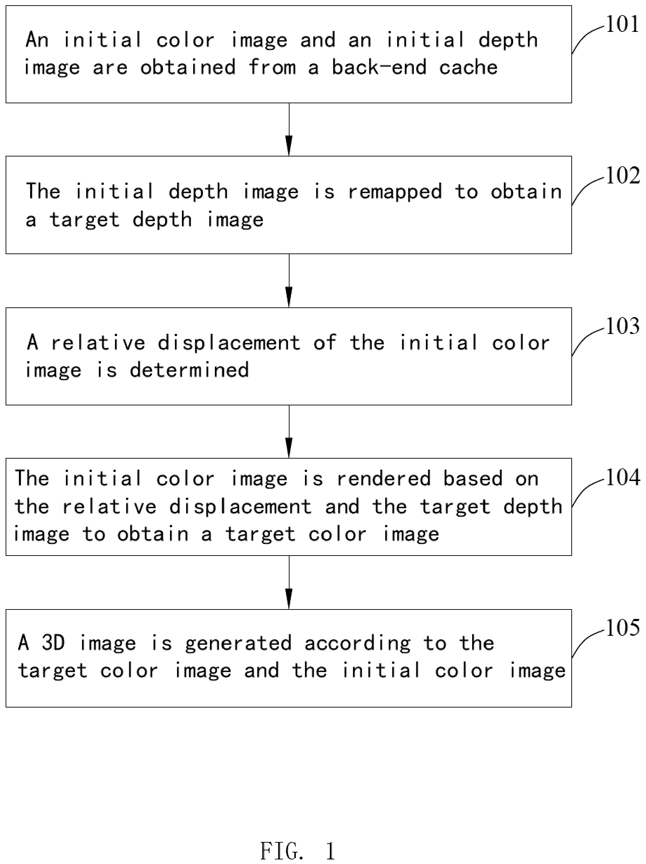

Referring to FIG. 1, a schematic flowchart of the 3D image generating method according to an embodiment of the present application is shown, and the 3D image generating method includes the following operations.

In operation 101, an initial color image and an initial depth image are obtained from a back-end cache.

In this embodiment, modern 3D rendering frameworks (opengl®, Metal®, Vulkan®, DirextX®) use dual/multiple cache technology. That is, the currently rendered image is not displayed on the screen in real time but stored in a back-end cache. The rendered content is displayed only after that the manager exchanges the contents between the front-end cache and back-end cache. Therefore, when the exchange is about to occur, a color image and a depth image in the back-end cache are obtained and re-rendered to generate images from other viewpoints, and a newly generated multi-viewpoint images, which are the content of the back-end cache, are exchanged with the content of the front-end cache. Therefore, the 3D image generating apparatus can obtain the initial color image and the initial depth image which are to be displayed in 3D from the back-end cache. The initial color image and the initial depth image are related to each other, that is, the initial color image and the initial depth image are both obtained by converting a target original image. The target original image is an RGBD image including two images. One of the two images is an ordinary RGB three-channel color image including color information of a graphic. The other of the two image is a depth image including depth information. The original color image is an RGB three-channel color image and includes a plurality of pixels. Each of the pixels is represented by coordinate values (x, y), and each of the pixels has a pixel value representing RGB color information. The initial depth image is a depth image and includes a plurality of pixels. The pixels of the initial depth image have coordinate values corresponding to a target depth image. Each of the pixels of the initial depth image has a depth value representing depth information.

In operation 102, the initial depth image is remapped to obtain a target depth image.

In this embodiment, after the initial depth image to be displayed in 3D is obtained from the back-end cache, the 3D image generating apparatus may remap the initial depth image to obtain the target depth image. In an embodiment, the initial depth image can be remapped to be the target depth image according to the following formula:

$$I_{d1}(z) = I_d(z) / D\max * MaxDepth$$,

$I_d$ represents the initial depth image, $I_{d1}$ represents the target depth image, $I_d(z)$ is a depth value of any pixel of the initial depth image, $I_{d1}(z)$ is a depth value of a pixel of the target depth image having coordinate values identical to those of $I_d(z)$. $D$ max is the maximum depth value of pixels of the initial depth image. $MaxDepth$ is an empirical value, which can be 100 or another value, such as 80, 90 or 110, which is not specifically limited as long as it does not exceed the maximum floating-point value. The coordinate values of pixels of the target depth image obtained by remapping correspond to the coordinate values of pixels of the initial depth image one to one, and the depth value of the initial depth image and the depth value of the target depth image are different from each other.

In operation 103, a relative displacement of the initial color image is determined.

In this embodiment, the 3D image generating apparatus can determine the relative displacement of the initial color image. In an embodiment, the 3D image generating apparatus can determine a y-axis rotation angle and an x-axis rotation angle corresponding to the target original image. The target original image is an original image corresponding to the initial color image and the initial depth image. Rendering position information is determined according to the y-axis rotation angle and the x-axis rotation angle, and the relative displacement is determined according to the initial position information and the rendering position information.

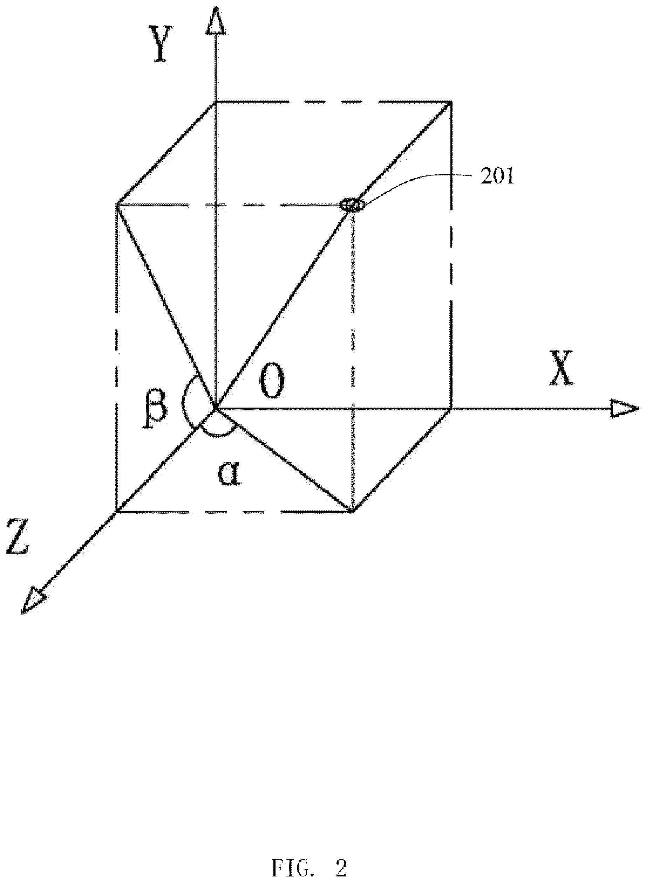

The determination of the relative displacement is described in detail below in conjunction with FIG. 2. Referring to FIG. 2, FIG. 2 is a schematic diagram showing an angle between a human eye and a screen according to an embodiment of the present application. As shown in FIG. 2, the label 201 represents a position of the human eye. In a space defined by an O-XYZ three-dimensional coordinate system having an origin which is the center point of a display screen (the center of the screen is the display screen for displaying the 3D image), an angle α is formed between a projection of a line on an XOZ plane and a positive z axis, the line is started from a user's eye to the center of the display screen, and an angle β is formed between a projection of the line on a YOZ plane and the positive z axis. A direction of an x-axis is identical to a left-right direction of the display screen, and a positive direction of the x-axis points from a center of a left part of the display screen to a center of a right part of the display screen. A direction of a y-axis is identical to a up-down direction of the display screen, and a positive direction of the y-axis points from a center of an upper part of the display screen to a center of a lower part of the display screen. According to the angles α and β, a distance H from the user's eye to the display screen, and a distance J from a center of a scene corresponding to the target original image to the display screen, a rotated angle a of the scene corresponding to the target original image around the y-axis (namely a "y-axis rotation angle" corresponding to the target original image) and a rotated angle b of the scene corresponding to the target original image around the x-axis (namely an "x-axis rotation angle" corresponding to the target original image) can be calculated. In an embodiment, the rotated angle a of the scene corresponding to the target original image around the y-axis can be calculated according to the following formula:

$$a = \arctan(H \times \tan \alpha / (H + J))$$ ,

where a is the y-axis rotation angle, H is the distance between the user's eye and the display screen, α is the angle between a first target projection and the positive z-axis of the coordinate system, and J is the distance between the center of scene corresponding to the target original image and the display screen. The display screen is the screen for displaying the 3D image, the first target projection is the projection of the target connection line on the XOZ plane, and the target connection line is the line from the user's eye to the center of the display screen.

The rotated angle b of the scene corresponding to the target original image around the x-axis is calculated according to the following formula:

$$b = \arctan(H \times \tan \beta / (H + J))$$ ,

where b is the x-axis rotation angle, β is the angle between a second target projection and the positive z-axis of the coordinate system, and O is the origin of the coordinate system. The second target projection is the projection of the target connection line on the YOZ plane.

After the y-axis rotation angle and the x-axis rotation angle corresponding to the target original image are determined, the 3D image display device can determine the rendering position information according to the y-axis rotation angle and the x-axis rotation angle. In an embodiment, the rendering position information can be determined according to the following formula:

$$Dx = \tan a * Rd$$ ,

and

$$Dy = \tan b * Rd$$ ,

where Dx is a coordinate value of the rendering position information on the x-axis, Dy is a coordinate value of the rendering position information on the y-axis, α is the y-axis rotation angle, b is the x-axis rotation angle, and Rd is a preset constant. The preset constant Rd can be 100 or 1000, which is not specifically limited and can be any value set according to the actual situation.

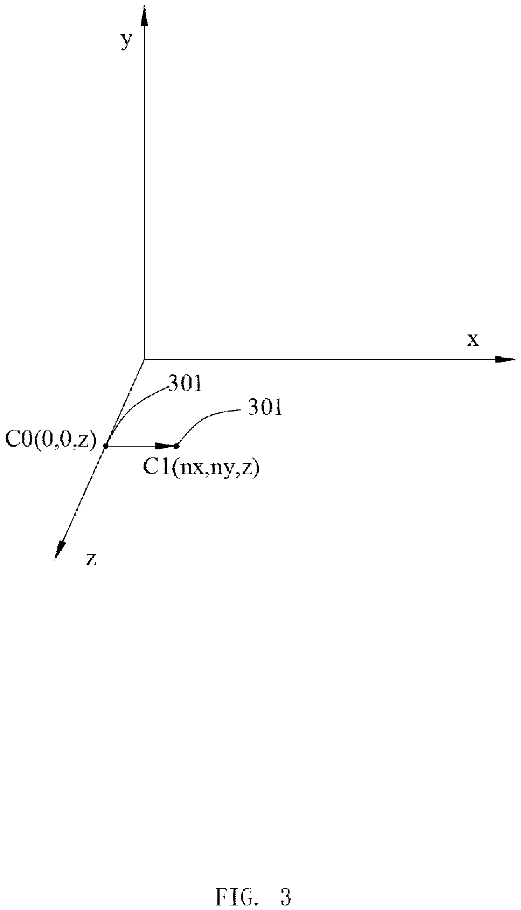

Therefore, after the rendering position information is determined, the 3D image display device can calculate the relative displacement according to the initial position information corresponding to the target original image and the rendering position information. As shown in FIG. 3, FIG. 3 is a schematic diagram showing the relative displacement according to the embodiment of the present application. A coordinate point C0 is where the camera 301 was located, and is the initial position information of the target original image. The camera 301 was located in a three-dimensional space defined by the x-axis, the y-axis and the z-axis, and the coordinate point C0 has coordinate values (0, 0, z). Different rendered images can be obtained by changing the position of the camera 301. However in order to keep sizes of the different rendered images to be the same, the position of camera 301 was remained unchanged on the z-axis. The changed position of the camera 301 was at a coordinate point C1, that is, the coordinate point C1 is the rendering position information, and the coordinate point C1 has coordinate values (nx, ny, z). The difference between the two positions of the camera 301 forms the relative displacement, and the relative displacement of the camera 301 is determined according to the following formula:

$$D = C1 - C0 = (nx, ny, 0)$$

In operation 104, the initial color image is rendered based on the relative displacement and the target depth image to obtain a target color image.

In this embodiment, after the relative displacement is determined, the 3D image generating apparatus can render the initial color image based on the relative displacement and the target depth image to obtain the target color image, and the process is detailed in the following.

In operation A1, an initial point cloud corresponding to the target depth image is determined.

In this operation, the 3D image generating apparatus converts the target depth image into the initial point cloud according to the following formula:

$$P0(x, y, z) = \left(-w/2 + x, -h/2 + y, I_{d1}(x, y)\right)$$

where $0 \leq x < w$, $0 \leq y < h$, P0 represents the initial point cloud, P0(x, y, z) are coordinate values of any point in the initial point cloud, $W$ is a width of the target depth image, $h$ is a height of the target depth image, $I_{d1}(x,y)$ is a depth value of a pixel with coordinate values (x, y) in the target depth image.

In operation A2, coordinate values of each point in the initial point cloud are adjusted according to the relative displacement to obtain a target point cloud.

In this operation, the relative displacement is applied to each point of the initial point cloud to obtain the target point cloud, in an embodiment, coordinate values of the the target point cloud is calculated according to the following formula:

$$P1(x, y, z) = P0(x, y, z) + D$$

where P0(x, y, z) represents the coordinate values of any point of the initial point cloud, Pl represents the target point cloud, P1(x, y, z) are the coordinate values of the point in the target point cloud. The coordinate values P1( x, y, z) of the point are obtained by adding D to the coordinate values P0(x,y,z). Since the position of the camera was remained unchanged on the z-axis and D has values (nx, ny, 0), z-values of the coordinate values of the target point cloud and the initial point cloud are the same.

In operation A3, coordinate values of each point of the target point cloud is processed to obtain a reference image.

In this operation, the reference image is a depth image that matches the size of the target depth image, and is initially assigned with a depth value A. Each point of the target point cloud is calculated according to the following formulas to obtain the reference image:

$$Z(x, y) = \min\left(Z(IP.x+1, IP.y+1), FltErr\right)$$

$$FltErr = A - w/2/z0$$

$$IP = LP + Dis * DLP$$

$$Dis = (PP - LP) * PN$$

and

$$DLP = -LP,$$

where $Z$ is the reference image, $Z(x,y)$ is a depth value of a pixel with coordinate values $(x,y)$ in the reference image, $Z(IP.x+1,IP.y+1)$ is a depth value of a pixel with coordinate values $((IP.x+1,IP.y+1)$ in the reference image, min means to assign $Z(x,y)$ with a smaller one of $Z(IPx+1,IP.y+1)$ $IP.y+1)$ and $FltErr$ ;

$$LP = \left(x0, \vec{y}0, z0\right), \quad PN = \left(0, \vec{0}, 1\right), \quad PP = \left(0, 0, \vec{w}/2\right)$$, $A$ is an initial depth value of the reference image, $W$ is the width of the target depth image, (x0, y0, z0) are the coordinate values of any point in the target point cloud, $IP.x$ is the x-value of the coordinate values of the point $IP$, and $IP.y$ is the y-value of the coordinate values of the point $IP$.

The reference image is a depth image with the same size as the target depth image. The initial depth value of the reference image is $A$. The initial depth value $A$ can be 100000, 90000, or 110000 which is not specifically limited as long as the initial depth value $A$ is greater than the depth value of the target depth image and less than the maximum floating-point value.

In operation D, pixels of the initial color image is processed according to depth values of pixels of the reference image to obtain the target color image.

In this operation, the target color image is determined according to the following formula:

$$I_{c1}\left(IP.x, IP.y\right) = I_{c}\left(x, y\right) * \left(\left(Z\left(x, y\right) + 1\right) > FltErr\right),$$

where $I_c$ represents the initial color image, $Ic1$ represents the target color image, $IP.x$ is the x-value of the coordinate values of the point $IP$, $IP.y$ is the y-value of the coordinate values of the point $IP$. $I_c(x,y)$ is a pixel value of a pixel with coordinate values (x,y) in the initial color image, and $Z(x,y)$ is a depth value of a pixel with coordinate values (x,y) in the reference image. $I_{c1}(IP.x,IP.y)$ is the pixel value of the pixel with coordinate values $(IP.x, IP.y)$ in the target color image.

In a condition that $(Z(x,y)+1)>FltErr$ is met, $((Z(x,y)+1)>FltErr)$ is 1, then the pixel with coordinate values $(Ip.x, Ip.y)$ in the target color image is assigned with the pixel value of the pixel with coordinate values (x,y) in the initial depth image.

In a condition that $(Z(x,y)+1)>FltErr$ is not met, $((Z(x,y)+1)>FltErr)$ is 0, then the pixel value of the pixel with coordinate values $(IP.x,IP.y)$ in the target color image is assigned with 0.

It should be noted that, after the target color image is determined, the 3D image generating apparatus can determine whether there are a hole in the target color image, and the process of which is detailed below.

Firstly, the initial depth image is processed according to the following formula to obtain a hole-filling depth image:

$$I_{d2}(IP.x, IP.y) = I_d(x, y) * \left(\left(Z(x, y) + 1\right) > FltErr\right),$$

where $I_d$ represents the initial depth image, $I_{d2}$ represents the hole-filling depth image, $I_d(x, y)$ is the depth value of the pixel with coordinate values (x,y) in the initial depth image, $I_{d2}(IP.x,IP.y)$ is a depth value of the pixel with coordinate values $(IP.x,IP.y)$ in the hole-filling depth image. In a condition that $((Z(x,y)+1)>FltErr)$ is 1, the pixel with coordinate values $(IP.x,IP.y)$ in the hole-filling depth image is assigned with the depth value of the pixel with coordinate values (x, y) in the initial depth image. In a condition that $((Z(x,y)+1)>FltErr)$ is 0, the depth value of the pixel with the coordinate values $(IP.x, IP.y)$ in the hole-filling depth image is assigned with a value of 0.

After that, the 3D image generating apparatus determines whether a pixel of the target color image is a hole based on a depth value of a pixel of the hole-filling depth image. Coordinate values of the pixel of the target color image is identical to coordinate values of the pixel of the hole-filling depth image. Pixels that are holes in the target color image are determined as target pixels.

The determining of a target pixel in the target color image is detailed below.

In a condition that $I_{d2}(x,y) \leq 0$ is met, the pixel with coordinate values (x,y) in the target color image is determined as the target pixel which is a hole, where $I_{d2}$ represents the hole-filling depth image, $I_{d2}(x,y)$ is a depth value of a reference pixel with coordinate values (x, y) in the hole-filling depth image. That is, in a condition that $I_{d2}(x,y) \leq 0$ is met, the pixel value of the pixel with coordinate values (x,y) in the target color image is 0, and for the color value is zero, the pixel is a hole.

After that, the 3D image generating apparatus determines a hole filling value of the target pixel according to coordinate values and a depth value of each pixel in the hole-filling depth image, and the process of which is detailed below.

In operation B1, preset paths of traversing the pixels in the hole-filling depth image is determined.

In this embodiment, preset paths can be determined according to the actual situation. For example, the preset paths can be 16, 6, or 5, which are not specifically limited. The preset paths can be determined based on the generating of the target 3D image.

16 preset paths are taken as examples to detail the traversal method.

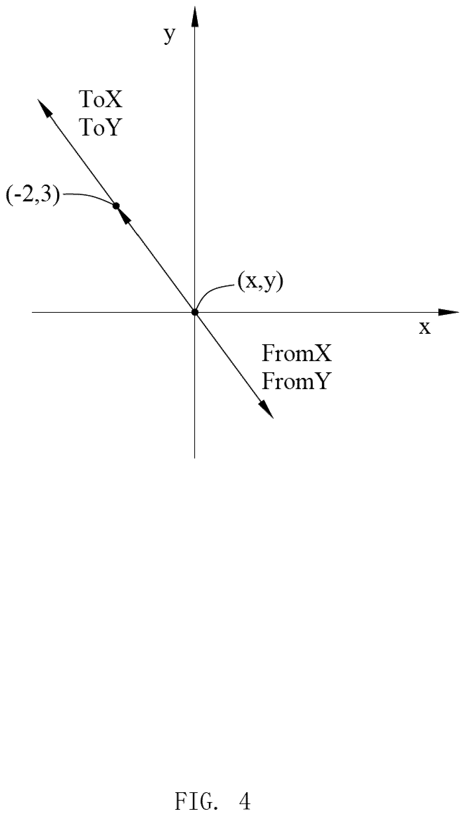

The preset paths are represented by Dirs, and there are 16 preset search directions for traversal, that is, Dirs=(-1, 1), (0, 1), (1, 1), (1, 0), (-1, 2), (1, 2), (2, 1), (2, -1), (-2, 3), (-1, 3), (1, 3), (2, 3), (3, 2), (3, 1), (3, -1), (3, -2). Referring to FIG. 4, FIG. 4 is a schematic diagram showing a preset path according to an embodiment of the present application. The preset path shown in FIG. 4 is Dirs=(-2, 3).

In operation B2, the preset paths are traversed based on coordinate values of each pixel in the hole-filling depth image, and a first target pixel and a second target pixel that meet the preset condition are determined.

The operations of traversing each pixel in the hole-filling depth image will be described below with reference to FIG. 4. Taking each pixel with coordinate values (x,y) in the hole-filling depth image as a starting point, and the traversal is performed in each of the preset directions according to the following operations.

In operation B21, negative direction traversal is performed according to the following formula:

$$FromX = FromX - Dirs\big[i\big]\big[0\big],$$

and

$$FromY = FromY - Dirs\big[i\big]\big[1\big].$$

The negative direction traversal is performed until $I_{d2}(FromX, FromY)>0$ is met or one of *FromX* and *FromY* exceeds the boundary of the hole-filling depth image.

*[i]* in *Dirs*[i][0] and *Dirs*[i][1] represents the preset path to be traversed, and [0] means that a value of *Dirs[i][0]* is equal to a left one of coordinate values of the preset path. [1] means that a value of *Dirs[i]*[1] is equal to a right one of the coordinate values of the preset path. For example, the preset path is *Dirs* = (-2,3), when coordinate values (-2,3) is used as the preset direction for the negative direction traversal (as shown in FIG. 4), *FromX = FromX - (- 2),* and *FromY = FromY - 3* are determined.

In operation B22, positive direction traversal is performed according to the following formula:

$$ToX = ToX + Dirs\big[i\big]\big[0\big],$$

and

$$ToY = ToY + Dirs\big[i\big]\big[1\big].$$

The positive direction traversal is performed until $I_{d2}(ToX, ToY)>0$ is met or one of *ToX* and *ToY* exceeds the boundary of the hole-filling depth image.

*[i]* in *Dirs[i][0]* and *Dirs[i][1]* represents the preset path to be traversed, and [0] means that the value of *Dirs [i]*[0] is equal to a left one of coordinate values of the preset path. [1] means that a value of *Dirs[i]*[1] is equal to a right one of the coordinate values of the preset path. For example, the preset path is *Dirs* = (-2,3), when coordinate values (-2,3) is used as the preset direction for the positive direction traversal (as shown in FIG. 4), *ToX = ToX + (- 2)* and *ToY = ToY + 3* are determined.

In operation B23, whether *FromX , FromY, ToX* and *ToY* exceed the boundary of the hole-filling depth image is determined. In a condition that one of them exceeds the boundary, a formula as follows is applied:

$$FltDis = FLOAT\_MAX.$$

In a condition that *FromX , FromY, ToX* and *ToY* do not exceed the boundary of the hole-filling depth image, a formula as follows is applied:

$$FltDis = \sqrt{\big(ToX - FromY\big)^2 + \big(ToY - FromX\big)^2}.$$

*FLOAT_ MAX* is the maximum floating-point value.

In operation B24, after all 16 preset paths are traversed, values of *FromX , FromY, ToX* and *ToY,* which result in the minimum value of *FltDis,* are determined, and a combination of (*FromX, FromY*) are taken as the coordinate values of the first target pixel of the hole-filling depth image, and a combination of *(ToX, ToY)* are taken as the coordinate values of the second target pixel of the hole-filling depth image.

In operation B3, the hole filling value of the target pixel is determined according to the coordinate values of the first target pixel and the coordinate values of the second target pixel.

In this embodiment, in a condition that a relationship of the depth values of the first target pixel and the second target pixel is $I_{d2}(FromX,FromY)<I_{d2}(ToX,ToY)$, *FillX = FromX* and *FillY = FromY* are determined. In a condition that the relationship of the depth values of the first target pixel and the second target pixel is $I_{d2}(FromX, FromY) \geq I_{d2}, (ToX, ToY)$, *FillX = ToX* and *FillY = ToY* are determined.

$I_{d2}(FromX,FromY)$ is the depth value of the first target pixel, and $I_{d2}(ToX,ToY)$ is the depth value of the second target pixel.

The hole filling value is determined according to the following formula:

$$I_{c1}\left(x,y\right)=I_{c1}\left(FillX, FillY\right),$$

where $I_{c1}$ represents the target color image, (x,y) is the coordinate values of the target pixel, $I_{c1}(x,y)$ is the hole filling value of the target pixel, $I_{c1}(FillX,FillY)$ is the pixel value of the pixel with coordinate values (*FillX,FillY*) in the target color image. The pixel value of the pixel with coordinate values (*FillX,FillY*) in the target color image is determined as the hole filling value according to the formula.

Finally, the hole filling value is assigned to the target pixel to fill the hole in the target color image, and the target color image without holes is obtained.

In operation 105, a 3D image is generated according to the target color image and the initial color image.

In this embodiment, the 3D image generating apparatus scales the target color image and the initial color image to obtain a left color image and a right color image correspondingly, that is, the 3D image generating apparatus scales the initial color image to a size (w/2, h) to obtain the left color image, and scales the target color image to the size (w/2, h) to obtain the right color image, and then the left color image is rewritten to a left half area Rect(0, 0, w/2, h) of the back-end cache, and the right color image is written to the right half area Rect(w/2, 0, w/2, h) of the back-end cache. When the 3D image is to be output, contents of the left half area of the back-end cache and contents of the right half area of the back-end cache are interleaved to obtain the 3D image and then the 3D image is output.

In summary, it can be seen that in the embodiments provided by the present application, the initial depth image of the 3D image to be generated is remapped to obtain the target depth image, and the relative displacement corresponding to the initial color image of the 3D image to be generated is determined. Then the initial color image is rendered according to the relative displacement and the target depth image to obtain the target color image, and the target color image and the initial color image are interleaved to generate the 3D image. In this way, a better and clearer 3D image can be got, which improves the users' viewing experience.

The present application is described above from the perspective of a 3D image generating method, and the present application is described below from the perspective of the 3D image generating apparatus.

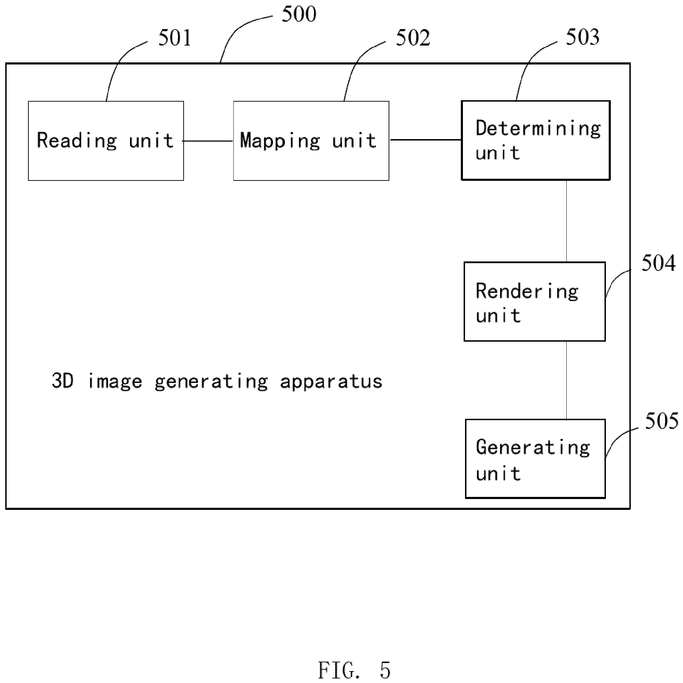

Please referring to FIG. 5, FIG. 5 is a schematic structural diagram of a 3D image generating apparatus provided by an embodiment of the present application. The 3D image generating apparatus 400 includes:

a reading unit 501 configured to read an initial color image and an initial depth image associated with the initial color image from a back-end cache;

a mapping unit 502 configured to remap the initial depth image to obtain a target depth image;

a determining unit 503 configured to determine a relative displacement corresponding to the initial color image;

a rendering unit 504 configured to render the initial color image based on the relative displacement and the target depth image to obtain a target color image;

a generating unit 505 configured to generate a 3D image according to the target color image and the initial color image.

In a possible embodiment, the determining unit 503 is further configured to:

determine a y-axis rotation angle and a x-axis rotation angle corresponding to the target original image, the target original image being an original image corresponding to the initial color image and the initial depth image;

determine rendering position information according to the y-axis rotation angle and the x-axis rotation angle; and

determine the relative displacement according to the initial position information corresponding to the target original image and the rendering position information.

In a possible embodiment, the determining unit 503 determining the rendering position information according to the y-axis rotation angle and the x-axis rotation angle includes:

determining the rendering position information according to the following formula:

$$Dx = \tan a * Rd ;$$

$$Dy = \tan b * Rd ,$$

where *Dx* is a coordinate value of the rendering position information on the x-axis, Dy is a coordinate value of the rendering position information on the y-axis, $\alpha$ is the y-axis rotation angle, *b* is the x-axis rotation angle, and *Rd* is a preset constant.

In one possible embodiment, the determining unit 503 determining the y-axis rotation angle and the x-axis rotation angle corresponding to the target original image includes:

determining the y-axis rotation angle according to the following formula:

$$a = \arctan(H \times \tan \alpha / (H + J)) ,$$

where a is the y-axis rotation angle, *H* is the distance between the user's eye and the display screen, $\alpha$ is the angle between a first target projection and the positive z-axis of the coordinate system, and *J* is the distance between the center of scene corresponding to the target original image and the display screen. The display screen is the screen for displaying the 3D image, the first target projection is a projection of the target connection line on the XOZ plane, and the target connection line is the line from the user's eye to the center of the display screen; and determining the x-axis rotation angle according to the following formula:

$$b = \arctan(H \times \tan \beta / (H + J)) ,$$

where *b* is the x-axis rotation angle, $\beta$ is the angle between a second target projection and the positive z-axis of the coordinate system, and O is the origin of the coordinate system. The second target projection is a projection of the target connection line on the YOZ plane.

In one possible embodiment, the generating unit 505 is further configured to:

scale the initial color image and the target color image to obtain the left color image and the right color image respectively;
write the left color image and the right color image into the back-end cache in association; and
upon receiving a display instruction, interleave the left color image and the right color image from the back-end cache to generate the 3D image.

In one possible embodiment, the rendering unit 504 is further configured to:

determine an initial point cloud corresponding to the target depth image;
adjust coordinate values of each point in the initial point cloud according to the relative displacement to obtain a target point cloud;
process the coordinate values of each point in the target point cloud to obtain a reference image;
process pixels of the initial color image according to depth values of the pixels of the reference image to obtain the target color image.

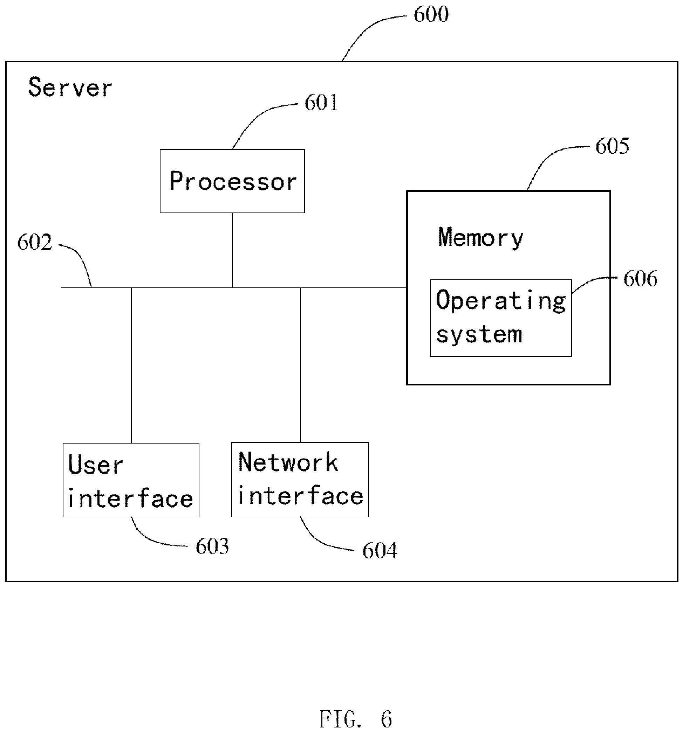

FIG. 6 is a schematic structural diagram of a server of the present application. As shown in FIG. 6, the server 600 in this embodiment includes at least one processor 601, at least one network interface 604 or another user interface 603, a memory 606, and at least one communication bus 602. The server 600 optionally includes the user interface 603, which can be a display, a keyboard, or a pointing device. The memory 605 may be a high-speed RAM memory, or may be a non-volatile memory, such as at least one disk memory. The memory 605 stores executable instructions. When the server 600 is running, the processor 601 communicates with the memory 605, and the processor 601 invokes the instructions stored in the memory 605 to execute the above-mentioned 3D image generating method. The operating system 606 includes various programs for implementing various basic tasks and processing hardware-based tasks.

The server provided by the embodiment of the present application can execute the above-mentioned embodiments of the 3D image generating method. The implementation principles and technical effects are similar to the above and will not be repeated here.

Those skilled in the art can clearly understand that for the convenience and simplicity of description, the specific working processes of the system, apparatus and units described above can refer to the corresponding working processes of the foregoing method embodiments, and will not be repeated.

As mentioned above, it should be noted that the above embodiments are only used to illustrate the technical solutions of the present application, and are not intended to limit the technical solutions. Although the present application has been described in detail with reference to the foregoing embodiments, those of ordinary skill in the art should understand that the technical solutions described in the foregoing embodiments can be modified, or some or all of the technical features can be equivalently replaced. Those modifications and replacement do not make the technical solutions deviate from the essence of the present application and should fall within the claimed scope of the present application.

## Claims

1. A method for generating 3D images, comprising:

    obtaining an initial color image and an initial depth image from a back-end cache, the initial color image and the initial depth image being associated with each other;
    remapping the initial depth image to obtain a target depth image;
    determining a relative displacement corresponding to the initial color image;
    rendering the initial color image based on the relative displacement and the target depth image to obtain a target color image;
    generating a 3D image based on the target color image and the initial color image.

2. The method of claim 1, wherein the determining the relative displacement corresponding to the target depth image comprises:

    determining a y-axis rotation angle and an x-axis rotation angle corresponding to a target original image, the target original image being an original image corresponding to the initial color image and the initial depth image;
    determining rendering position information according to the y-axis rotation angle and the x-axis rotation angle;
    determining the relative displacement according to initial position information corresponding to the target original image and the rendering position information.

3. The method of claim 2, wherein the determining the rendering position information based on the y-axis rotation angle and the x-axis rotation angle comprises:

    determining the rendering position information according to a formula:

    $$Dx = \tan a * Rd,$$

    and

    $$Dy = \tan b * Rd,$$

    wherein $Dx$ is a coordinate value of the rendering position information on the x-axis, $Dy$ is a coordinate value of the rendering position information on the y-axis, $a$ is the y-axis rotation angle, $b$ is the x-axis rotation angle, and $Rd$ is a preset constant.

4. The method of claim 2, wherein the determining the y-axis rotation angle and the x-axis rotation angle corresponding to the target original image comprises:

determining the y-axis rotation angle according to a formula:

$$a = \arctan(H \times \tan\alpha \,/\, (H+J))_{,}$$

wherein *a* is the y-axis rotation angle, *H* is a distance between a user's eye and a display screen, $\alpha$ is an angle between a first target projection and a positive z-axis of a coordinate system, and *J* is a distance between a center of scene corresponding to the target original image and the display screen, the display screen is a screen for displaying the 3D image, the first target projection is a projection of a target connection line on an XOZ plane, and the target connection line is a line from the user's eye to a center of the display screen;

determining the x-axis rotation angle according to a formula:

$$b = \arctan(H \times \tan\beta \,/\, (H+J))_{,}$$

wherein *b* is the x-axis rotation angle, $\beta$ is an angle between a second target projection and the positive z-axis of the coordinate system, O is an origin of the coordinate system, and the second target projection is a projection of the target connection line on an YOZ plane.

5. The method of any one of claims 1 to 4, wherein the rendering the initial color image based on the relative displacement and the target depth image to obtain the target color image comprises:

    determining an initial point cloud corresponding to the target depth image;
    adjusting coordinate values of each point in the initial point cloud according to the relative displacement to obtain a target point cloud;
    processing the coordinate values of each point in the target point cloud to obtain a reference image;
    processing pixels in the initial color image according to depth values of pixels of the reference image to obtain the target color image.

6. The method of any one of claims 1 to 4, wherein the generating the 3D image according to the target color image and the initial color image comprises:

    scaling the initial color image and the target color image to obtain a left color image and a right color image correspondingly;
    writing the left color image and the right color image into the back-end cache in association; and
    upon receiving a display instruction, interleaving the left color image and the right color image from the back-end cache to generate the 3D image.

7. A 3D image generating apparatus, comprising:

    a reading unit configured to read an initial color image and an initial depth image associated with the initial color image from a back-end cache;
    a mapping unit configured to remap the initial depth image to obtain a target depth image;
    a determining unit configured to determine a relative displacement corresponding to the initial color image;
    a rendering unit configured to render the initial color image based on the relative displacement and the target depth image to obtain a target color image; and
    a generating unit configured to generate a 3D image according to the target color image and the initial color image.

8. The apparatus of claim 7, wherein the determining unit is further configured to:

    determine a y-axis rotation angle and a x-axis rotation angle corresponding to the target original image, the target original image being an original image corresponding to the initial color image and the initial depth image;
    determine rendering position information according to the y-axis rotation angle and the x-axis rotation angle; and
    determine the relative displacement according to the initial position information corresponding to the target original image and the rendering position information.

9. The apparatus of claim 8, wherein the determining unit is further configured to:

determining the rendering position information according to a formula:

$$Dx = \tan a * Rd$$ ;

$$Dy = \tan b * Rd$$ ,

wherein *Dx* is a coordinate value of the rendering position information on an x-axis, Dy is a coordinate value of the rendering position information on a y-axis, $\alpha$ is the y-axis rotation angle, *b* is the x-axis rotation angle, and *Rd* is a preset constant.

10. A computer device, comprising:
at least one connected processor, a memory and a transceiver, wherein the memory is configured to store program codes, and the processor is configured to call the program codes in the memory to execute operations of the method of any one of claims 1 to 6.

An initial color image and an initial depth image are obtained from a back-end cache /-101

The initial depth image is remapped to obtain a target depth image /-102

A relative displacement of the initial color image is determined /-103

The initial color image is rendered based on the relative displacement and the target depth image to obtain a target color image /-104

A 3D image is generated according to the target color image and the initial color image /-105

FIG. 1

FIG. 2

FIG. 3

FIG. 4

FIG. 5

FIG. 6

<table>
<tr><td colspan="2"><strong>INTERNATIONAL SEARCH REPORT</strong></td><td>International application No.<br><br>**PCT/CN2023/101681**</td></tr>
</table>

| | |
|---|---|
| **A.**    **CLASSIFICATION OF SUBJECT MATTER**<br><br>     G06T17/00(2006.01)i；   G06T15/00(2011.01)i<br><br>According to International Patent Classification (IPC) or to both national classification and IPC | |

| **B.**    **FIELDS SEARCHED** |
|---|
| Minimum documentation searched (classification system followed by classification symbols)<br><br>     IPC：G06T |
| Documentation searched other than minimum documentation to the extent that such documents are included in the fields searched |
| Electronic data base consulted during the international search (name of data base and, where practicable, search terms used)<br><br>     CNTXT, USTXT, VEN, CNKI, IEEE: 深度, 彩色, 移, 动, 相机, 旋转, 角度, 屏幕, 中心, 渲染, 三维, 重映射, 量化, angle, rotat<br>     +, depth, RGB, color, mov+, camera, screen, center, 3D, three dimension+, remapping, quantif+ |

| **C.**    **DOCUMENTS CONSIDERED TO BE RELEVANT** | | |
|---|---|---|
| Category* | Citation of document, with indication, where appropriate, of the relevant passages | Relevant to claim No. |
| PX | CN 115205451 A (FUTURE TECHNOLOGY (XIANGYANG) CO., LTD.) 18 October 2022 (2022-10-18)<br>     claims 1-9, and description, paragraphs [0121]-[0125] | 1-10 |
| A | CN 101937578 A (NINGBO UNIVERSITY) 05 January 2011 (2011-01-05)<br>     description, paragraphs [0085]-[0090] | 1-10 |
| A | CN 111047709 A (JINAN UNIVERSITY) 21 April 2020 (2020-04-21)<br>     entire document | 1-10 |
| A | CN 113643414 A (BEIJING DAJIA INTERNET INFORMATION TECHNOLOGY CO., LTD.) 12 November 2021 (2021-11-12)<br>     entire document | 1-10 |
| A | US 2010316284 A1 (SAMSUNG ELECTRONICS CO., LTD.) 16 December 2010 (2010-12-16)<br>     entire document | 1-10 |

| ☐ Further documents are listed in the continuation of Box C. | ☑ See patent family annex. |
|---|---|

| | |
|---|---|
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br><br>     **08 September 2023** | Date of mailing of the international search report<br><br>     **13 September 2023** |
| Name and mailing address of the ISA/CN<br><br>**China National Intellectual Property Administration (ISA/ CN)**<br>**China No. 6, Xitucheng Road, Jimenqiao, Haidian District, Beijing 100088** | Authorized officer<br><br><br><br>Telephone No. |

Form PCT/ISA/210 (second sheet) (July 2022)

**INTERNATIONAL SEARCH REPORT**
**Information on patent family members**

International application No.

**PCT/CN2023/101681**

| Patent document cited in search report | | | Publication date (day/month/year) | Patent family member(s) | | | Publication date (day/month/year) |
|---|---|---|---|---|---|---|---|
| CN | 115205451 | A | 18 October 2022 | None | | | |
| CN | 101937578 | A | 05 January 2011 | None | | | |
| CN | 111047709 | A | 21 April 2020 | None | | | |
| CN | 113643414 | A | 12 November 2021 | None | | | |
| US | 2010316284 | A1 | 16 December 2010 | KR | 20100132717 | A | 20 December 2010 |

Form PCT/ISA/210 (patent family annex) (July 2022)